Europäisches Patentamt

**European Patent Office**

Office européen des brevets

(11) Numéro de publication: **0 225 255**
**A1**

## (12) DEMANDE DE BREVET EUROPEEN

(21) Numéro de dépôt: 86402596.0

(51) Int. Cl.⁴: **G 02 C 11/00**

(22) Date de dépôt: 21.11.86

(30) Priorité: 22.11.85 FR 8517307

(43) Date de publication de la demande:
10.06.87 Bulletin 87/24

(84) Etats contractants désignés:
AT BE CH DE ES GB GR IT LI LU NL SE

(71) Demandeur: **HENNERT, Société Anonyme dite:**
**136, Avenue du Maine**
**F-75014 Paris (FR)**

(72) Inventeur: **Roig, Norbert**
**42, Avenue du Maréchal Leclerc**
**F-77590 Bois-Le-Roi (FR)**

**Dartiguenave, Edgard 29-35, Rue des Yebles**
**Bâtiment 1 Résidence les Jardins de Changis**
**F-77210 Avon (FR)**

(74) Mandataire: **Nony, Michel et al**
**Cabinet DUPUY & LOYER 14, rue La Fayette**
**F-75009 Paris (FR)**

(54) Dispositif antivol pour lunettes.

(57) L'invention est relative à un dispositif antivol pour lunettes du type destiné à être mis en place sur une branche de lunettes et comportant une douille destinée à être enfilée sur une branche des lunettes à bloquer en position ouverte, ladite douille étant pourvue d'un talon destiné à prendre appui contre la face postérieure soit de l'oculaire soit de la monture, des moyens de verrouillage étant prévus pour immobiliser la douille par rapport à la branche sur laquelle elle est montée de manière que le talon empêche le repliement de ladite branche.

Il comprend un boîtier (2) de forme sensiblement parallélépipédique aplatie, à l'intérieur duquel est scellé un organe de repérage apte à être détecté dans un système de détection électromagnétique à rayonnement haute ou basse fréquence associé à une alarme visuelle et/ou sonore, ledit boîtier comportant sur une de ses faces principales (14) des moyens de retenue (15, 16) de la douille (1), lesdits moyens de retenue étant agencés de manière à empêcher toute séparation de la douille (1) et du boîtier (2) avant libération des moyens de verrouillage (6) de la douille par rapport à la branche (8) sur laquelle elle est engagée.

Fig. 1

**Description**

Dispositif antivol pour lunettes.

La présente invention est relative à un dispositif destiné à être mis en place sur une branche de lunettes et destiné à empêcher le vol de celles-ci, notamment dans les magasins où les lunettes sont proposées en libre service.

Dans de tels lieux de vente, les lunettes sont exposées sur des présentoirs d'où l'acheteur les retire en vue de les essayer.

La société déposante a déjà proposé dans son brevet français 78 36 940 un dispositif antivol mécanique offrant par rapport aux dispositifs antérieurement connus, notamment l'avantage d'être réutilisable.

Un tel dispositif comprend essentiellement une douille destinée à être enfilée sur la branche des lunettes à bloquer en position ouverte, ladite douille étant pourvue d'un talon destiné à prendre appui contre la face postérieure, soit de l'oculaire soit de la monture, des moyens de verrouillage étant prévus pour immobiliser la douille par rapport à la branche sur laquelle elle est montée de manière que le talon empêche le repliement de ladite branche. Ces moyens de verrouillage sont de préférence réalisés sous la forme d'une vis pointeau s'engageant dans un orifice correspondant ménagé dans la paroi latérale de la douille perpendiculairement à la face de la branche à immobiliser en position ouverte, l'extrémité de la vis venant directement ou indirectement s'appliquer contre ladite face de la branche.

De préférence, la vis est conformée pour n'être manoeuvrée qu'au moyen d'un outil spécial engagé dans une cavité de section polygonale, de préférence non standard, réalisée dans le corps de la vis.

On connaît par ailleurs, des systèmes antivol aptes à déclencher une alarme visuelle et/ou sonore dans le cas où un objet fait l'objet d'une tentative de vol, cette alarme étant déclenchée lorsque l'acheteur indélicat portant l'objet tente de franchir une limite prédéterminée à l'intérieur du magasin de vente.

De tels systèmes comportent généralement une étiquette ou une plaquette fixée à l'objet et munie d'un organe de repérage dont la détection par un dispositif se trouvant généralement à la limite du lieu de vente, déclenche l'alarme.

On connaît divers systèmes de ce type, basés soit sur une détection par effet électromagnétique, soit sur une détection par rayonnement haute ou basse fréquence.

Ainsi, dans un système électromagnétique, on fixe sur le produit une étiquette ou une plaquette comportant un composant métallique de dimensions déterminées et réalisé en un alliage également bien déterminé apte à déclencher une alarme lors de sa détection dans un détecteur sélectif de rayonnement électromagnétique disposé généralement sous forme de portique à la sortie du magasin.

Dans le cas par exemple de systèmes de détection à haute fréquence, l'organe de réperage est constitué par un composant passif habituellement formé d'une micro-diode associée à un filament formant antenne dont la détection par un dispositif émetteur-récepteur de rayonnements à une fréquence déterminée réalise le déclenchement d'une alarme, le dispositif émetteur-récepteur étant généralement disposé également sous forme d'un portique à la sortie du magasin.

De tels systèmes sont largement utilisés. A titre d'exemple, on peut citer les systèmes commercialisés par la société SENELCO AG.

On a déjà proposé d'utiliser de tels systèmes pour des lunettes. A cet affet, on a proposé de fixer sur la branche de la paire de lunettes une étiquette comportant un organe de repérage approprié. Néanmoins l'expérience a montré que cette étiquette pouvait relativement facilement être retirée par un acheteur indélicat, de telle sorte que la paire de lunettes volée pouvait franchir les portes du magasin sans être détectée.

La présente invention a pour objet, un dispositif antivol associant un blocage mécanique de la branche de lunettes, tel que par exemple celui décrit dans la demande de brevet français précitée de la société déposante, à un organe de repérage apte à être détecté dans un système de détection électromagnétique ou à rayonnement haute ou basse fréquence en vue de déclencher une alarme visuelle et/ou sonore en cas de vol, le dispositif selon l'invention étant conçu de manière que l'organe de repérage ne puisse être retiré indépendamment de la partie mécanique du dispositif.

Le dispositif selon l'invention se caractérise par le fait qu'il comprend un boîtier de forme sensiblement parallélepipédique aplatie, à l'intérieur duquel est scellé un organe de repérage apte à être détecté dans un système de détection électromagnétique ou à rayonnement haute ou basse fréquence associé à une alarme visuelle et/ou sonore, ledit boîtier comportant sur une de ses faces principales des moyens de retenue de la douille, lesdits moyens de retenue étant agencés de manière à empêcher toute séparation de la douille et du boîtier avant libération des moyens de verrouillage de la douille par rapport à la branche sur laquelle elle est engagée.

Dans un mode particulier de réalisation, les moyens de retenue comportent un organe en forme d'arceau recevant l'extrémité d'une embase de la douille sensiblement à l'aplomb de son talon et une languette s'engageant dans un orifice de la douille ménagé à son extrémité opposée, ladite languette étant réalisée de manière à s'étenure dans le trajet de déplacement des moyens de verrouillage, notamment une vis pointeau, de la douille par rapport à la branche de lunettes. Dans une forme particulière de réalisation la languette présente un orifice pour le passage de la branche de lunettes correspondante.

On comprend que grâce à cette configuration des moyens de retenue, la douille est immobilisée aussi bien latéralement que longitudinalement par rapport au boîtier comportant l'organe de repérage et que donc, le boîtier ne peut être retiré qu'après libération des moyens de verrouillage, c'est-à-dire dans un mode de réalisation préféré, la vis pointeau qui, engagée dans la douille réalise un appui sur la branche de lunettes et sur la languette solidaire du boîtier.

Le boîtier est de préférence réalisé en matière plastique, la face munie des moyens de retenue de la douille pouvant être, avant introduction de l'organe de repérage, réalisée sous forme d'un couvercle articulé par une extrémité au reste du boîtier puis scellée sur celui-ci notamment par soudure aux ultra-sons, après mise en place de l'organe de repérage.

La face principale opposée du boîtier peut avantageusement être agencée pour constituer un support d'informations identifiant le produit.

En variante, le boîtier peut être réalisé en matière plastique transparente laissant voir par transparence une étiquette support d'informations contenue à l'intérieur.

Dans le but de mieux faire comprendre l'invention, on va maintenant en décrire à titre d'exemple nullement limitatif un mode de réalisation particulier en se référant au dessin annexé dans lequel :

- la figure 1 illustre un mode de réalisation de dispositif selon l'invention monté sur une branche de lunettes,

- la figure 2 est une vue en coupe correspondant à la figure 1,

- la figure 3 est une vue de dessus du dispositif,

- la figure 4 est une vue en coupe selon IV-IV de la figure 2, et

- la figure 5 est une vue en position ouverte du boîtier utilisable dans le dispositif des figures 1 à 4.

La figure 6 illustre un boîtier selon un second mode de réalisation de l'invention.

La figure 7 est une vue analogue à celle de la figure 2 avec mise en oeuvre du boîtier de la figure 6.

Le dispositif selon l'invention se compose de manière générale d'une douille désignée globalement par 1 et d'un boîtier de forme sensiblement parallélépipédique aplatie désigné globalement par 2.

La douille et le boîtier sont tous deux réalisés de préférence en matière plastique.

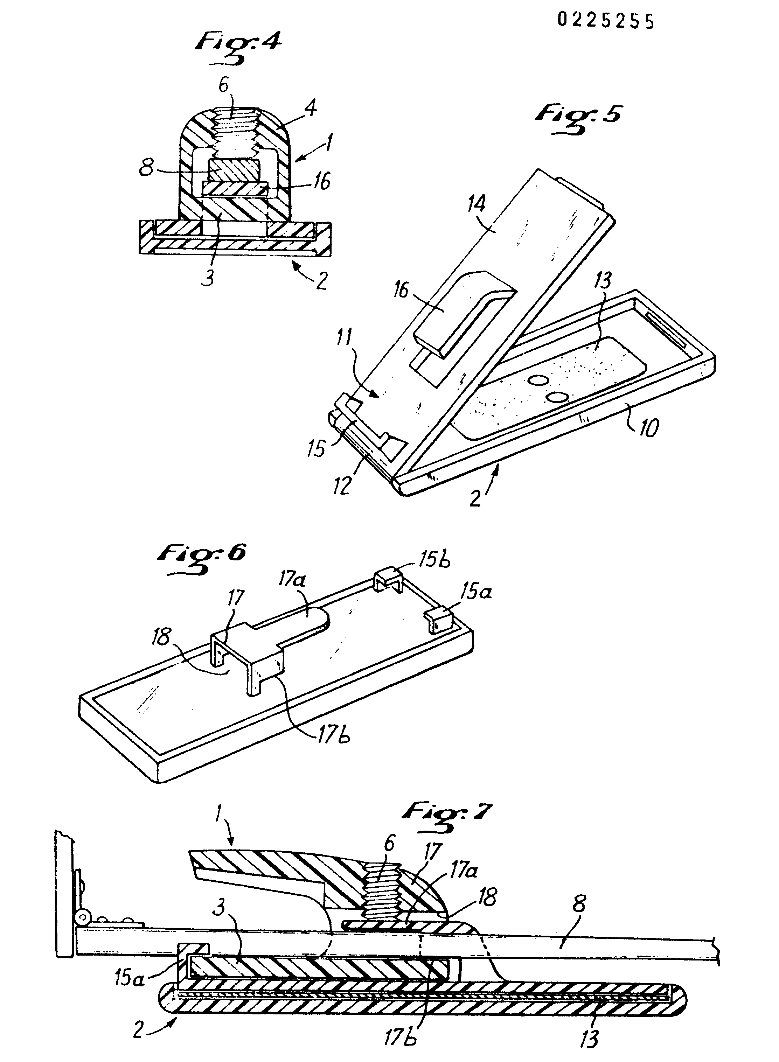

La douille 1 présente sensiblement la configuration de la douille décrite dans le brevet français 78 36940 de la société déposante et comporte plus précisément une embase de section rectangulaire 3 et un flasque de profil arrondi 4 dans la paroi duquel est réalisé un orifice 5 pour le passage d'un organe de verrouillage tel qu'une vis pointeau 6 présentant une cavité à partir de sa face extérieure pour l'engagement d'un organe de manoeuvre tel qu'une clé, la section de la cavité étant par exemple comme on le voit sur la figure 3, sensiblement triangulaire à flancs arrondis, la clé de manoeuvre (non représentée) devant présenter une section correspondante.

Le flasque 4 de la douille présente à son extrémité avant un talon 7 situé sensiblement à l'aplomb de l'extrémité de son embase 3 et destiné à former une butée pour l'oculaire empêchant le repliement de la branche de lunettes 8 sur laquelle la douille est enfilée par un évidement traversant 9 s'étendant depuis l'extrémité arrière de la douille opposée au talon 7.

Le boîtier 2 que l'on voit en position ouverte sur la figure 5 comporte un corps sensiblement parallélépipédique 10 sur lequel est articulé un couvercle 11 le long d'une charnière 12.

Selon l'invention, le boîtier comporte un organe de repérage 13 qui, dans la pratique, peut être constitué par une étiquette adhésive fixée dans le fond du corps 10 du boîtier et comportant des pastilles ou des filaments métalliques de caractéristiques bien déterminées pour leur détection par exemple dans un système de détection électromagnétique ou un composant formé d'une diode et d'une antenne en vue d'une détection dans un système émetteur-recepteur à rayonnement haute fréquence. Après mise en place de l'organe de repérage 13, le couvercle 11 est rabattu sur le corps 10 et scellé à celui-ci sur sa périphérie, par exemple par soudure aux ultra-sons.

Le boîtier 2 ainsi formé est alors associé à la douille grâce aux moyens de retenue dont il est pourvu et que l'on voit le mieux sur la figure 5.

Ces moyens de retenue comportent sur la face supérieure 14 du boîtier un arceau 15 au voisinage de la zone d'articulation 12 et une languette 16 en déport vers l'extérieur de la paroi 14, l'extrémité de la languette étant dirigée vers l'arceau 15.

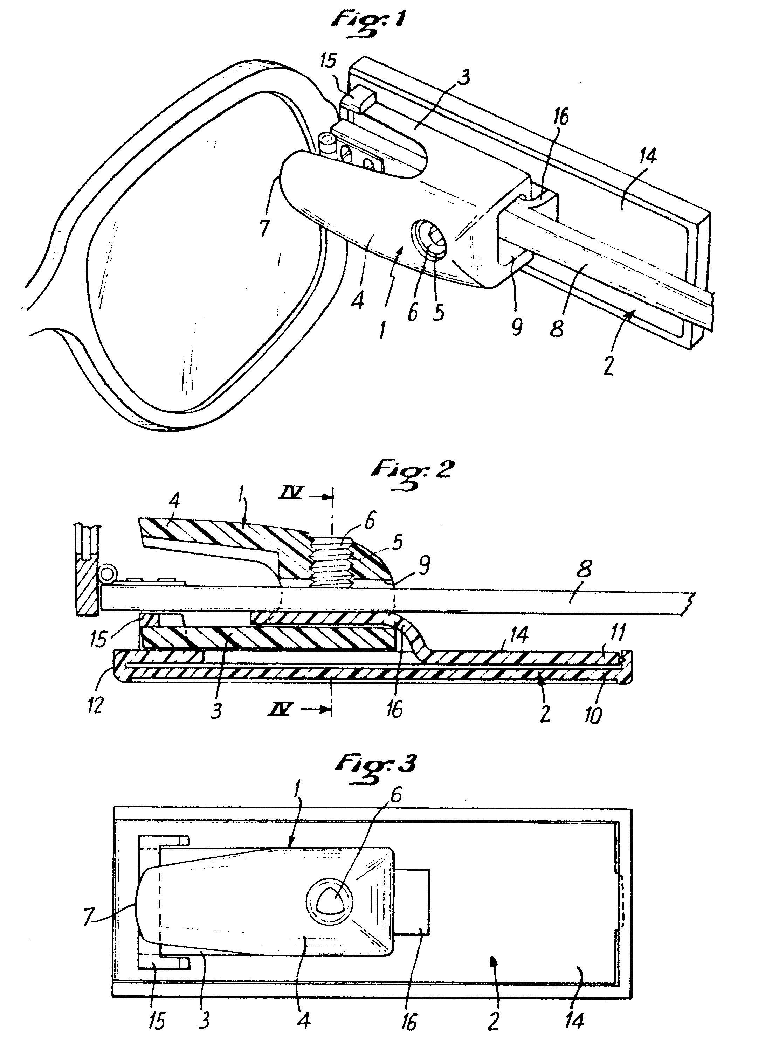

La mise en place et la retenue du boîtier sur la douille sont illustrées aux figures 1 à 4.

La douille 1 est mise en place sur le boîtier de telle manière que l'extrémité avant de l'embase 3 de la douille s'engage dans l'arceau 15 tandis que la languette 16 se trouve engagée dans l'orifice 9 de la douille dans le trajet de déplacement de la vis pointeau 6 de sorte que, comme on le voit sur les figures 2 et 6, en position d'utilisation, la vis pointeau 6 réalise un appui à force aussi bien sur la branche de lunettes 8 que sur la languette 16 et l'on comprend qu'il n'est ainsi pas possible de détacher le boîtier 2 de la douille 1 sans au préalable déverrouiller la douille par actionnement de la vis pointeau 6, ce qui ne peut se faire qu'à l'aide d'un outil spécial.

On se réfère maintenant aux figures 6 et 7 qui illustrent un second mode de réalisation de l'invention. Les moyens de retenue de la douille sur le boîtier 2' comprennent un arceau en deux parties 14a, 15b et une languette 17 présentant un orifice 18 pour le passage de la branche 8 de lunettes ménagée à la partie arrière de la languette et qui comporte un prolongement 17a sur lequel vient s'appuyer la vis pointeau 6 comme on la voit sur la figure 7 évitant ainsi un contact direct de la vis sur la branche 8. La languette 17 comporte une portée d'appui 17b sur l'embase 3 de la douille.

Le boîtier peut être réalisé en matière plastique transparente auquel cas on peut mettre en place à l'intérieur une étiquette support d'informations 19, en plus de l'étiquette comportant l'organe de repérage 13, les informations pouvant être lues au travers de la face transparente du boîtier.

On a ainsi réalisé selon l'invention un dispositif antivol pour lunettes cumulant de façon particulièrement remarquable les avantages d'un système de blocage mécanique et d'un système de détection apte à déclencher une alarme et ce par des moyens particulièrement simples, économiques et fiables.

Bien que l'invention ait été décrite en liaison avec des modes de réalisation particuliers, il est bien évident qu'elle n'y est nullement limitée et qu'on peut lui apporter de nombreuses variantes et modications sans pour autant sortir ni de son cadre ni de son esprit.

## Revendications

1 - Dispositif antivol pour lunettes du type destiné à être mis en place sur une branche de lunettes et comportant une douille destinée à être enfilée sur une branche des lunettes à bloquer en position ouverte, ladite douille étant pourvue d'un talon destiné à prendre appui contre la face postérieure soit de l'oculaire soit de la monture, des moyens de verrouillage étant prévus pour immobiliser la douille par rapport à la branche sur laquelle elle est montée de manière que le talon empêche le repliement de ladite branche, caractérisé par le fait qu'il comprend un boîtier (2,2') de forme sensiblement parallélépipédique aplatie, à l'intérieur duquel est scellé un organe de repérage (13) apte à être détecté dans un système de détection électromagnétique ou à rayonnement haute ou basse fréquence associé à une alarme visuelle et/ou sonore, ledit boîtier comportant sur une de ses faces principales (14) des moyens de retenue (15, 16; 15a, 15b, 17) de la douille (1), lesdits moyens de retenue étant agencés de manière à empêcher toute séparation de la douille (1) et du boîtier (2,2') avant libération des moyens de verrouillage (6) de la douille par rapport à la branche (8) sur laquelle elle est engagée.

2 - Dispositif selon la revendication 1, caractérisé par le fait que les moyens de retenue comportent un organe en forme d'arceau (15;15a,15b) recevant l'extrémité d'une embase (3) de la douille sensiblement à l'aplomb de son talon (7) et une languette (16;17) s'engageant dans un orifice (9) de la douille ménagé à son extrémité opposée, ladite languette (16; 17) étant réalisée de manière à s'étendre dans le trajet de déplacement des moyens de verrouillage, notamment une vis pointeau (6), de la douille par rapport à la branche de lunettes.

3 - Dispositif selon la revendication 2, caractérisé par le fait que la languette (17) comporte un orifice (18) pour le passage de la branche (8) de lunettes.

4 - Dispositif selon l'une quelconque des revendications 1 à 3, caractérisé par le fait que le boîtier et la douille sont réalisés en matière plastique.

5 - Dispositif selon la revendication 4, caractérisé par le fait que le boîtier est réalisé en matière plastique transparente.

6 - Dispositif selon l'une quelconque des revendications 4 et 5, caractérisé par le fait que la face (14) du boîtier munie des moyens de retenue (15,16) de la douille (1) est réalisée sous forme d'un couvercle (11) articulé par une extrémité (12) au reste du boîtier (10) puis scellé sur celui-ci, après mise en place de l'organe de repérage (13).

7 - Dispositif selon les revendications 5 et 6, caractérisé par le fait que le boîtier contient une étiquette support d'informations (19).

0225255

Fig.1

Fig.2

Fig.3

Fig: 4

Fig: 5

Fig: 6

Fig: 7

0225255

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | FR-A-2 445 538  (HENNERT)<br>* Figure 1; revendications *<br><br>--- | 1-7 | G 02 C  11/00 |
| A | FR-A-2 417 790  (Y. BAGLIN)<br>* Revendications *<br><br>--- | 1-7 | |
| A | FR-A-2 515 366  (BERTHET-BONDET SA)<br>* Revendications *<br><br>----- | 1-7 | |

DOMAINES TECHNIQUES
RECHERCHES (Int. Cl.4)

G 02 C  11/00

Le présent rapport de recherche a été établi pour toutes les revendications

| Lieu de la recherche | Date d'achèvement de la recherche | Examinateur |
|---|---|---|
| LA HAYE | 12-02-1987 | CALLEWAERT-HAEZEBROU |